# FASCICULE DE BREVET EUROPEEN

(11) **EP 2 013 018 B1**
(45) Date de publication et mention de la délivrance du brevet: **10.05.2017**
(21) Numéro de dépôt: 07731949.9
(22) Date de dépôt: 26.04.2007
(51) Int. Cl.: B32B 27/08, B32B 27/32, B65D 65/40

(54) **RECIPIENTS DE CONDITIONNEMENT DE PRODUITS OBTENU PAR PLIAGE D'UN MATERIAU MULTICOUCHE EN FEUILLE SEMI-RIGIDE A HAUTE RESISTANCE THERMIQUE**
VERPACKUNGSBEHÄLTER HERGESTELLT DURCH FALTEN EINES MEHRSCHICHTIGEN MATERIALS AUS EINER HOCHTEMPERATURBESTÄNDIGEN HALBSTEIFEN FOLIE
PRODUCT PACKAGING CONTAINERS OBTAINED BY FOLDING A MULTILAYER SEMI-RIGID SHEET MATERIAL HAVING HIGH THERMAL RESISTANCE

(30) Priorité: 28.04.2006 FR 0603850
(43) Date de publication de la demande: 14.01.2009
(73) Titulaire: Lagarde, 26780 Malataverne (FR); Les Cles Du Developpement, 84300 Cavaillon (FR)
(72) Inventeur: CLAEYS, Christian, 84300 Cavaillon (FR); RANCHON, Denis, 26780 Malataverne (FR)
(74) Mandataire: Domange, Maxime
(86) Numéro de dépôt international: PCT/FR2007/051176
(87) Numéro de publication internationale: WO 2007/125256

(56) Documents cités:
- EP-A- 1 273 425
- EP-A- 1 541 340
- WO-A2-2004/085268
- US-A- 4 705 708
- US-A- 5 032 434
- US-A- 5 750 226
- US-A1- 2002 110 654

## Description

### Arrière-plan de l'invention

La présente invention se rapporte au domaine général du conditionnement de produits traités thermiquement, notamment stérilisés, pasteurisés, remplis à chaud ou aseptiques.

Dans le domaine alimentaire par exemple, il existe plusieurs types de conserves qui servent au conditionnement de légumes, de plats préparés, de nourriture pour bébés, de viandes, de fruits, de jus de fruits, de sauces...

Ce sont soit des boites ou barquettes métalliques, soit des bocaux de verre, soit encore des sachets souples ou des barquettes plastiques semi-rigides, soit des boites réalisées avec un complexe papier-aluminium.

Toutes les conserves et semi-conserves subissent un traitement thermique, classiquement en autoclave, pour garantir la conservation et/ou la cuisson des produits.

Dans la mesure où les conserves sont destinées à être justement conservées un temps parfois très prolongé par rapport à la durée de péremption du produit à l'air libre, il est nécessaire que le matériau avec lequel est réalisée la conserve soit très étanche aux gaz et en particulier à l'oxygène, premier facteur de péremption par oxydation des produits.

Les différents matériaux de conserve connus présentent de bonnes étanchéités à l'oxygène mais présentent divers inconvénients.

Concernant les boites métalliques, des risques de coupures ou de blessures existent lors de leur ouverture et des déformations peuvent entrainer une perte d'étanchéité. En outre, les boites métalliques ne sont pas facilement compactables.

Concernant les bocaux de verre, leur fragilité et leur constitution même engendrent des risques de casse et de fuite lors de l'élaboration, du transport ou de l'utilisation de la conserve. En outre, les bocaux en verre ne sont pas compactables.

Concernant les sachets qui ne peuvent pas être facilement empilés, ils ne protègent pas forcément l'intégrité des produits qu'ils contiennent et il n'est pas possible d'optimiser les volumes de rangement ce qui pose un problème logistique.

Concernant les complexes papier-aluminium, comme pour les boites métalliques, des difficultés vis-à-vis des contrôleurs à rayons X et des détecteurs de métaux et de corps étrangers sont rencontrées.

Globalement les matériaux connus pour réaliser des conserves sont difficilement recyclables et présentent de faibles capacités de biodégradation.

Par ailleurs, il existe de nombreux matériaux en plastique transparents pour former des sachets ou des barquettes par extrusion, éventuellement extrusion-soufflage. Cependant de tels matériaux ne sont adaptés ni au traitement thermique ni à la conservation sur une longue durée à cause d'une étanchéité insuffisante.

### Objet et résumé de l'invention

La présente invention a donc pour but principal de pallier de tels inconvénients en proposant un matériau, résistant à une température supérieure à 124°C, recyclable, compactable, voire biodégradable, contrôlable par détecteur de métaux ou rayons X et présentant une faible perméabilité aux gaz, une grande robustesse et une masse faible. Ce matériau permet la fabrication de récipients d'emballage pour lesquels les volumes de rangement et de transport peuvent être optimisés et pour lesquels l'ouverture est facile et peut être réalisée sans déchet indépendant après ouverture.

La présente invention fournit un récipient pour le conditionnement de produits traités thermiquement obtenu par pliage d'un matériau semi rigide multicouche en feuille ayant une faible perméabilité aux gaz tel que définit dans la revendication 1.

L'invention propose ainsi un matériau multicouche en feuille semi-rigide apte à être plié et destiné à la fabrication par pliage de récipients définissant un espace intérieur pour le conditionnement de produits traités thermiquement, ledit matériau multicouche comprenant au moins une couche dite extérieure de matériau polymère, destiné à être à l'extérieur de l'espace intérieur, et une couche dite intérieure de matériau polymère, destinée à être à l'intérieur de l'espace intérieur, entre lesquelles le matériau multicouche présente une faible perméabilité aux gaz telle qu'il existe un gradient positif de sensibilité à l'humidité de cette perméabilité aux gaz de l'intérieur vers l'extérieur, ce gradient permettant le séchage du matériau multicouche par évaporation vers l'extérieur pendant une phase de stabilisation du matériau multicouche, formé en un récipient définissant un espace intérieur, consécutive au traitement thermique des produits conditionnés et telle qu'il existe un gradient positif de perméabilité aux gaz de l'intérieur vers l'extérieur du matériau multicouche lorsque le matériau multicouche est placé en atmosphère humide et un gradient négatif de perméabilité aux gaz de l'intérieur vers l'extérieur du matériau multicouche lorsque le matériau multicouche est placé en atmosphère sèche.

On entend par les termes « gradient positif de sensibilité à l'humidité de la perméabilité aux gaz » de l'intérieur vers l'extérieur qu'il existe une augmentation de la sensibilité à l'humidité de cette perméabilité lorsque l'on se rapproche de l'extérieur. On entend par « sensibilité à l'humidité de la perméabilité aux gaz » l'augmentation de la perméabilité avec l'humidité. Plus un matériau est sensible plus sa perméabilité augmente quand le degré d'humidité augmente. Les matériaux sensibles à l'humidité présentent donc une perméabilité importante aux gaz en atmosphère humide bien qu'une fois sec, ils soient très faiblement perméables.

Le matériau multicouche comprend par exemple entre la couche intérieure et la couche extérieure, une première couche, proche de la couche intérieure, peu sensible à l'humidité signifiant que sa perméabilité reste constante quel que soit le degré d'humidité ambiant et une seconde couche, proche de la couche extérieure, sensible à l'humidité signifiant que sa perméabilité s'accroit avec l'humidité.

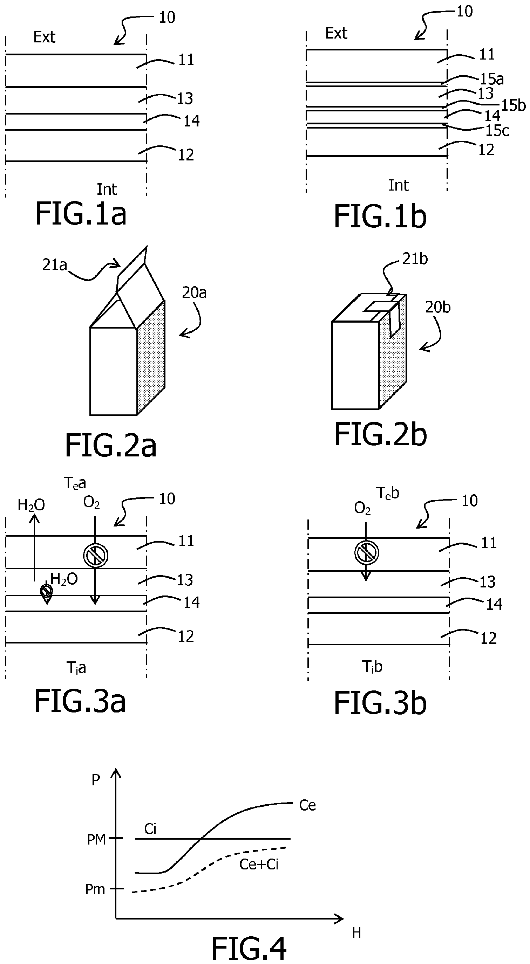

Une telle configuration est illustrée sur la figure 4 représentant les perméabilités P en fonction de l'humidité H croissante. La courbe Ci représente la perméabilité de la première couche. La courbe Ce représente la perméabilité de la seconde couche. La perméabilité globale Ce+Ci est représentée en pointillés. On voit qu'en atmosphère humide, la première couche détermine approximativement la perméabilité globale alors qu'en atmosphère sèche, la seconde couche détermine majoritairement la perméabilité globale. Les deux courbes Ce et Ci se croisent. Plus généralement, selon l'invention, le différentiel de perméabilité des deux couches de l'intérieur vers l'extérieur, correspondant à la différence Ce-Ci, augmente avec l'augmentation du taux d'humidité. La première couche donne une garantie de perméabilité maximale PM du matériau multicouche qui ne pourra pas dépasser celle assurée par la première couche quelles que soient les conditions hydrométriques. Sur la figure 4, le différentiel de perméabilité de l'intérieur vers l'extérieur est d'abord négatif puis positif.

Pour permettre à la couche la plus sensible à l'humidité de sécher, il est en outre nécessaire d'assurer la caractéristique de l'invention selon laquelle la couche la moins sensible à l'humidité est située vers l'intérieur du récipient. On constate donc que l'agencement du gradient de sensibilité à l'humidité de l'intérieur vers l'extérieur est précisément utile pour faire sécher le matériau multicouche traité thermiquement et lui conférer toutes ses propriétés de faible perméabilité.

Ces deux couches peuvent d'ailleurs être séparées ou non par une autre couche, par exemple de polypropylène, dont la perméabilité aux gaz est supérieure à celle des deux couches de matière. L'essentiel selon l'invention est donc la présence dans le matériau multicouche d'au moins deux couches de matière étant les moins perméables aux gaz dans le matériau multicouche et présentant un gradient positif de sensibilité à l'humidité de l'intérieur vers l'extérieur.

Ces deux couches de matière peuvent aussi être matérialisées par une seule couche à sensibilité variable constituée d'une matière dont la sensibilité à l'humidité de la perméabilité augmente quand on se déplace vers l'extérieur sur la tranche du matériau multicouche.

Avec un tel matériau multicouche, on exploite le traitement thermique du récipient fabriqué à partir de la feuille et la constitution même du matériau multicouche pour faire sécher le matériau multicouche pendant la phase de stabilisation incluant un refroidissement du matériau multicouche.

L'invention intéresse particulièrement les cas où a lieu un traitement thermique en autoclave du récipient obtenu par pliage. Lors d'un tel traitement thermique du récipient, l'atmosphère de traitement est généralement riche en humidité. Comme le matériau multicouche présente globalement un gradient positif de sensibilité à l'humidité de la perméabilité aux gaz de l'intérieur vers l'extérieur, en atmosphère humide, la perméabilité aux gaz sera plus importante vers l'extérieur. Cela permet, à la suite du traitement thermique, de laisser sécher les couches les plus sensibles à l'humidité, qui sont les plus proches de l'extérieur du récipient, par évaporation de l'humidité vers l'extérieur.

La faible perméabilité aux gaz est alors majoritairement déterminée par les propriétés de la couche la moins sensible à l'humidité représentée sur la courbe Ci, l'autre couche étant alors perméable relativement à la couche la moins sensible à l'humidité.

Puis, lors du refroidissement, le contenu du récipient étant chaud, l'humidité s'évapore. La faible perméabilité globale Ce+Ci rejoint alors sensiblement celle de la couche la plus sensible à l'humidité Ce.

L'intérieur du récipient reste donc en permanence isolé de l'humidité et des gaz extérieurs grâce à la présence de la matière à faible sensibilité à l'humidité de sa perméabilité aux gaz. Cette couche reste en effet en permanence très peu perméable aux gaz, ce qui n'est pas le cas de la couche de matière située plus vers l'extérieur.

En revanche, en atmosphère sèche, la barrière aux gaz sera optimale puisque toutes les matières peu perméables aux gaz intégrées dans le matériau multicouche présentent alors toutes globalement une perméabilité minimale aux gaz.

Cette caractéristique, correspondant à l'illustration de l'invention présentée sur la figure 4, permet de bénéficier de hautes propriétés d'étanchéité aux gaz d'une matière très sensible à l'humidité dès que celle-ci est sèche et de bloquer l'entrée de gaz lorsque cette matière sensible à l'humidité est humide, le temps que celle-ci sèche. Une fois sèche, la matière sensible à l'humidité présente alors des propriétés de faible perméabilité supérieures à celles de la matière peu sensible à l'humidité. L'étanchéité aux gaz est alors substantiellement déterminée par l'étanchéité de la matière sensible à l'humidité après séchage.

Selon l'invention, le matériau multicouche comprend au moins une couche d'EVOH (copolymère d'éthylène et d'alcool vinylique) entre les deux couches extérieures et intérieures de matériau polymère, le gradient de sensibilité à l'humidité permettant le séchage de l'EVOH par évaporation vers l'extérieur.

L'EVOH est en effet très sensible à l'humidité et son étanchéité aux gaz diminue avec l'humidité. Pour que l'EVOH puisse sécher, il est nécessaire de le disposer à proximité de la couche extérieure de polymère. En effet, l'évacuation vers l'intérieur de l'humidité est bloquée grâce au gradient positif de sensibilité à l'humidité selon lequel une plus faible perméabilité aux gaz est observée vers l'intérieur du récipient.

Ici, le gradient positif est alors réalisé à l'aide d'une matière de faible perméabilité aux gaz ayant une sensibilité à l'humidité plus faible que la sensibilité à l'humidité de l'EVOH. Au fur et à mesure de son séchage, l'EVOH réacquiert une basse perméabilité aux gaz. Une fois séché, cette basse perméabilité déterminera avantageusement la perméabilité aux gaz vers l'intérieur du récipient. En effet, l'EVOH sec sera alors avantageusement la matière la moins perméable aux gaz.

Selon l'invention, le gradient est réalisé en intercalant un matériau dit différentiel faisant barrière aux gaz et présentant une sensibilité à l'humidité inférieure à l'EVOH entre la couche de matériau polymère intérieure et la couche d'EVOH.

Un tel matériau différentiel peut être intercalé au cours d'un procédé d'extrusion à l'aide par exemple d'une tête d'extrusion supplémentaire ou par un procédé de complexage du matériau différentiel sur la couche d'EVOH.

Selon l'invention, le matériau différentiel est un matériau polymère dit porteur recouvert d'oxyde de Silicium (SiOx) ou d'oxyde d'Aluminium (AlOx) et préfabriqué.

De tels matériaux revêtus sont disponibles dans le commerce. Le matériau polymère porteur recouvert de silicium cristallisé, donc de verre, présente une faible perméabilité aux gaz. Cette faible perméabilité aux gaz est insensible à l'humidité. Ce matériau différentiel est en outre facile à complexer avec une couche d'EVOH par exemple extrudée avec la couche extérieure de matériau polymère et la couche intérieure de matériau polymère. Il est également envisageable qu'une couche de polymère, par exemple du polypropylène, soit insérée entre la couche d'EVOH et le matériau différentiel sans se départir du principe de l'invention selon lequel le matériau multicouche présente un gradient positif de sensibilité à l'humidité.

Un avantage de l'utilisation d'un tel matériau différentiel polymère revêtu d'oxyde est sa compacité. Cela permet de réaliser un matériau multicouche peu épais. En outre, un tel matériau polymère revêtu a un comportement robuste au pliage. C'est en revanche un matériau qui ne peut pas être extrudé, ni thermoformé, contrairement à l'existant car ces procédés, engendrant une extension du matériau, génèrent des cassures dans la couche d'oxyde et ruinent donc l'étanchéité de cette couche.

Dès lors qu'un matériau multicouche destiné à définir un intérieur et un extérieur d'un récipient présente une couche d'EVOH et une couche de polyester recouvert d'oxyde, telles que la couche d'EVOH se situe vers l'extérieur par rapport à la couche de polyester recouvert, un gradient positif de sensibilité à l'humidité de la perméabilité du matériau multicouche est présent.

Selon l'invention, le matériau différentiel est orienté de telle manière que la face orientée vers l'intérieur est la face recouverte de SiOx ou AlOx.

Le revêtement de SiOx ou d'AlOx étant relativement fragile, on permet ainsi que le pliage du matériau multicouche en feuille n'engendre pas de cassure par extension à ce niveau. En outre, on constate que, dans le matériau multicouche selon l'invention, la résistance au pliage du matériau différentiel polymère revêtu est d'autant meilleure que ce matériau différentiel est situé du côté intérieur du matériau multicouche et est donc généralement plié en compression et non en extension.

La présence d'une seule couche d'oxyde, fragile à l'extension et donc à plier avec précaution, en combinaison avec un matériau souple qu'est l'EVOH, donne donc au matériau multicouche l'aptitude à être plié. Il se trouve donc en outre que la couche d'oxyde devant être située vers l'intérieur du récipient finalement formé pour permettre un gradient positif de sensibilité à l'humidité de la perméabilité, cette caractéristique donne aussi à l'ensemble son aptitude à être plié. En revanche, le matériau multicouche obtenu ne peut pas être thermoformé, l'étirement détruirait en effet les propriétés de la couche d'oxyde.

Avantageusement, le matériau polymère porteur est du polyester.

Selon une caractéristique particulière de l'invention, l'épaisseur du matériau multicouche est comprise entre 100 µm et 500 µm.

Selon une caractéristique particulière de l'invention, le matériau multicouche est tel qu'il permet d'obtenir des récipients par pliage dont, pour une contenance de 500ml, la perméabilité à l'oxygène après stabilisation du matériau multicouche est inférieure à 0,01 cc d'O₂/24 heures à 23°C à 50% d'humidité relative par récipient.

Une telle étanchéité est proche de celle obtenue avec les emballages métalliques sertis.

Selon des caractéristiques particulières de l'invention, le matériau multicouche est transparent.

Selon d'autres caractéristiques particulières de l'invention, le matériau multicouche est imprimable extérieurement ou en sandwich.

Selon une caractéristique de l'invention, le matériau polymère utilisé dans les couches intérieures et extérieures de matériau polymère est principalement du polypropylène.

Ce matériau polymère présente les avantages d'être neutre chimiquement, amorphe, d'avoir une bonne tenue à la température et de pouvoir être chargé, par exemple de manière à être pelable. En outre, il est recyclable plus aisément que le verre ou encore que le métal.

Un tel récipient est micro-ondable après ouverture afin de réchauffer les aliments.

Avantageusement, le récipient est destiné à conditionner un produit choisi parmi les produits alimentaires, d'hygiène, pharmaceutiques.

L'invention concerne aussi un procédé d'obtention d'un récipient selon l'invention comprenant les étapes consistant à plier et souder un matériau multicouche en feuille semi-rigide ayant une tenue et une résistance à une température supérieure à 124°C et une basse perméabilité aux gaz, ledit pliage définissant un espace intérieur pour le conditionnement de produits traités thermiquement, le dit matériau multicouche étant obtenu par un procédé comprenant au moins les étapes d'extruder en feuille des matériaux monocouches et/ou multicouches dits intermédiaires et/ou complexer des matériaux monocouches et/ou multicouches intermédiaires, comprenant au moins une couche dite extérieure de matériau polymère et une couche dite intérieure de matériau polymère. Le procédé selon l'invention étant tel que l'étape d'extrusion et/ou de complexage est réalisée de manière à ce que le matériau multicouche présente une faible perméabilité aux gaz telle qu'il existe un gradient positif de sensibilité à l'humidité de cette perméabilité aux gaz de l'intérieur vers l'extérieur, ce gradient permettant le séchage du matériau multicouche par évaporation vers l'extérieur pendant une phase de stabilisation du matériau multicouche consécutive au traitement thermique des produits conditionnés.

Selon un mode de réalisation, le procédé selon l'invention comprend au moins une étape d'extrusion d'une couche d'EVOH avec la couche extérieure de matériau polymère.

Dans un mode de réalisation avantageux, le procédé comprend l'étape d'extruder ou de complexer un matériau intermédiaire dit différentiel faisant barrière aux gaz et présentant une sensibilité à l'humidité inférieure à l'EVOH entre la couche de matériau polymère intérieure et la couche d'EVOH.

Selon une caractéristique de l'invention, le matériau différentiel est un matériau polymère dit porteur recouvert d'oxyde de Silicium ou d'oxyde d'Aluminium.

Selon une autre caractéristique, le matériau différentiel est obtenu dans une étape de préfabrication au cours de laquelle un matériau faisant barrière aux gaz et présentant une sensibilité à l'humidité inférieure à l'EVOH est déposé sur un matériau intermédiaire polymère, le matériau différentiel ainsi préfabriqué étant ensuite complexé avec les autres matériaux monocouches ou multicouches intermédiaires pour l'obtention du matériau multicouche en feuille final.

L'invention concerne enfin un procédé de conditionnement d'un produit comprenant les étapes de remplir le récipient ainsi obtenu avec le produit, fermer le récipient par scellage, traiter thermiquement l'ensemble, laisser l'ensemble refroidir à température ambiante afin de laisser sécher le matériau multicouche par évaporation vers l'extérieur du récipient.

Selon une caractéristique particulière, les étapes de soudure et/ou de scellage sont réalisées par un procédé choisi parmi les procédés thermiques et les procédés utilisant des ultrasons.

Dans un mode de réalisation, l'étape de traitement thermique consiste à faire un traitement thermique dans un autoclave à contre-pression.

Le traitement thermique peut être choisi parmi la pasteurisation, la stérilisation, le remplissage aseptique.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1a et 1b sont des sections montrant la structure multicouche d'un matériau multicouche en feuille semi-rigide selon l'invention;
- les figures 2a et 2b représentent des types de récipients réalisés à l'aide d'un matériau multicouche en feuille selon l'invention ;
- les figures 3a et 3b illustrent le principe de l'invention ;
- la figure 4 montre les perméabilités en fonction de l'humidité de deux couches permettant de réaliser un matériau multicouche selon l'invention ;
- la figure 5 donne un exemple détaillé de réalisation d'un matériau multicouche selon l'invention ;
- la figure 6 illustre une caractéristique additionnelle avantageuse du matériau multicouche selon l'invention.

### Description détaillée d'un mode de réalisation

La figure 1 illustre la structure d'un matériau multicouche 10 selon l'invention. Ce matériau multicouche comprend une couche extérieure 11 et une couche intérieure 12 de matériau polymère, par exemple du polypropylène.

Les termes « extérieur » et « intérieur » sont utilisés pour désigner respectivement les faces extérieure et intérieure du matériau multicouche, la face extérieure étant destinée à être à l'extérieur d'un espace intérieur défini par pliage du matériau multicouche et la face intérieure étant destinée à être à l'intérieur de l'espace intérieur ainsi défini.

L'utilisation de polypropylène pour réaliser les couches intérieure 12 et extérieure 11 est avantageuse dans la mesure où ce polymère est déclinable en des résines présentant des propriétés distinctes. Par exemple, un PP homopolymère présente une très bonne transparence et se soude facilement. Les propriétés des soudures sont importantes puisque c'est bien souvent à leur niveau qu'est déterminée la perméabilité du récipient obtenu. Il existe également des PP « peel », pelable en français, permettant une ouverture aisée au niveau de certaines soudures.

Le polypropylène présente une perméabilité aux gaz assez élevée d'environ 2000 cc/24h/23°C/50% H.R./m² pour 40 µm d'épaisseur dans les conditions standards mais il donne sa rigidité au matériau multicouche. Avantageusement, le grade du matériau multicouche obtenu est compris entre 8 et 15. Cela permet d'obtenir une élasticité et une résistance à la rupture adaptée au pliage.

L'utilisation de polyéthylène dans les couches intérieure 12 et extérieure 11 peut aussi être envisagée. Cependant il n'est alors pas possible de dépasser 121°C lors du traitement thermique et l'aspect est translucide.

Entre les deux couches de matériau polymère 11 et 12 le matériau multicouche 10 présente une faible perméabilité aux gaz telle qu'il existe un gradient positif de sensibilité à l'humidité de cette perméabilité aux gaz de l'intérieur vers l'extérieur, ce gradient permettant le séchage du matériau multicouche 10 par évaporation vers l'extérieur pendant une phase de stabilisation du matériau multicouche consécutive au traitement thermique des produits conditionnés.

Le gradient de sensibilité peut être continu ou discontinu, par exemple utilisant deux couches de matière de propriétés différentes concernant notamment la sensibilité à l'humidité de la perméabilité aux gaz. Selon la figure 1a, le gradient est réalisé à l'aide de deux couches 13 et 14 constituées de matériaux présentant une faible perméabilité aux gaz et une sensibilité à l'humidité de cette faible perméabilité différente.

La couche 13 présente une sensibilité à l'humidité de sa perméabilité aux gaz plus importante que la couche 14.

Avantageusement, les sensibilités à l'humidité sont telles qu'il existe un gradient négatif de perméabilité aux gaz de l'intérieur vers l'extérieur du matériau multicouche 10 lorsque le matériau multicouche 10 est placé en atmosphère humide et un gradient positif de perméabilité aux gaz de l'intérieur vers l'extérieur du matériau multicouche 10 lorsque le matériau multicouche 10 est placé en atmosphère sèche. La couche 13 présente alors une perméabilité aux gaz plus importante que la couche 14 en atmosphère humide et une perméabilité plus faible que la couche 14 en atmosphère sèche. Cela est schématiquement illustré sur la figure 4 où la courbe Ce correspondrait alors à la perméabilité de la couche 13 et la courbe Ci à celle de la couche 14.

La couche 13 est avantageusement constituée d'EVOH.

L'EVOH présente un retrait thermique faible ce qui est un grand avantage pour les applications visées. Les autres matières plastiques peu perméables aux gaz que sont les polyamides, le nylon, le polychlorure de vinylidène présentent des caractéristiques mécaniques moindres.

L'EVOH présente l'avantage supplémentaire d'être une matière élastique qui peut donc être étiré. Cela lui donne un grand atout face à l'utilisation classique de feuille d'Aluminium dans lesquelles il est très courant que soient générées des microfissures notamment lors du pliage.

Présentant peu de risque de cassure mécanique, l'EVOH est un matériau de choix du point de vue de l'étanchéité des récipients obtenus.

La couche 13 présente avantageusement une épaisseur d'au minimum 10 µm et préférentiellement autour de 20 µm. Cela permet d'obtenir un compromis pour avoir un comportement satisfaisant lors du pliage et une étanchéité permettant la conservation sur une durée de l'ordre de plusieurs années.

La figure 1b illustre un second mode de réalisation de l'invention. La couche 13 d'EVOH est liée à la couche extérieure de polymère 11 par une couche de colle 15a, par exemple une colle à base de copolymère éthylène - vinylacétate. Cette couche de colle est avantageusement extrudée en même temps que les couches de polymères qu'elle assemble.

Une couche 14 d'un matériau dit différentiel faisant barrière aux gaz et présentant une sensibilité à l'humidité inférieure à l'EVOH est ensuite complexée entre la couche de matériau polymère intérieure 12 et la couche d'EVOH 13.

Le matériau différentiel 14 est avantageusement un matériau polymère dit porteur recouvert d'oxyde de Silicium (SiOx) ou d'oxyde d'Aluminium (AlOx) et préfabriqué. De tels matériaux polymères revêtus sont trouvés dans le commerce sous les appellations génériques Pet SiOx et Pet AlOx. Il s'agit d'une feuille de polyester recouvert d'une couche de l'ordre de 4 µm d'épaisseur de SiOx ou d'AlOx. Le film de SiOx ou de AlOx est obtenu par exemple par pulvérisation sur une feuille de polyester extrudée soufflée. Les couches d'oxyde sont barrières à l'humidité, à l'oxygène, aux gaz en général et aux ultraviolets quelle que soit l'humidité ambiante d'où leur grand intérêt pour l'application visée.

La perméabilité aux gaz de ce matériau différentiel est équivalente à celle d'une feuille d'Aluminium non pliée après traitement thermique. Elle est d'environ 2 cc/m²/23°C/50%H.R..

La figure 4 représente précisément la courbe Ce correspondant à la perméabilité de la couche 13 d'EVOH et la courbe Ci correspondant à celle de la couche 14 recouverte de la couche d'oxyde. Lorsque le taux d'humidité est élevé, la couche d'oxyde détermine approximativement un maximum de perméabilité aux gaz PM et, lorsque le taux d'humidité est bas, la couche d'EVOH sec détermine majoritairement un minimum de perméabilité aux gaz Pm.

Le matériau différentiel constitué d'un matériau polymère porteur recouvert d'oxyde supporte le pliage éventuellement en présence d'un chauffage pouvant aller jusqu'à 150°C. Ce matériau différentiel ne peut en revanche pas être étiré car cela mène à la cassure du film ayant les caractéristiques du verre.

L'utilisation de Pet SiOx ou de Pet AlOx en combinaison avec l'EVOH est particulièrement avantageuse du point de vue de l'étanchéité globale d'un matériau multicouche destiné à être plié. Si le Pet SiOx présente en effet des risques de cassure ponctuelle proche de celle des feuilles d'aluminium, son utilisation en combinaison avec l'EVOH permet de garantir une très bonne étanchéité aux gaz grâce à la combinaison des deux matières, EVOH et couche d'oxyde. Il est aussi envisageable d'utiliser une couche de polypropylène sur laquelle on a déposé un film d'oxyde de Silicium ou d'Aluminium. En outre, comme, selon l'invention, la couche recouverte d'oxyde est située vers l'intérieur du matériau, c'est la couche d'EVOH, élastique, qui subit la déformation la plus importante.

Pour minimiser les risques de cassure du film d'oxyde, dans la mesure où les formes des récipients obtenus après pliage sont généralement convexes, on prévoit avantageusement de placer le matériau différentiel de manière telle que le film d'oxyde soit vers l'intérieur du récipient. Ainsi, lors du pliage, le film sera contraint en compression et non en extension. Cela minimise les risques de rupture. Le matériau multicouche est alors apte à supporter des moyens mécaniques ou thermiques de pliage sans que ne soient dégradées ses propriétés d'étanchéité.

Le complexage est avantageusement réalisé en utilisant des couches de colle 15b et 15c entre, respectivement, la couche d'EVOH 13 et le matériau différentiel 14 et le matériau différentiel 14 et la couche intérieure 12.

L'homme du métier de la fabrication des plastiques connaît les procédés d'extrusion et de complexage utiles à la fabrication du matériau multicouche selon la structure présentée sur la figure 1b. Après extrusion d'un premier matériau intermédiaire comprenant la couche extérieure et la couche d'EVOH, il procèdera au complexage du matériau différentiel sur ce matériau intermédiaire puis au complexage de la couche intérieure sur le matériau différentiel.

### Exemple de réalisation :

Le matériau multicouche réalisé présente une couche extérieure de polypropylène pelable d'une épaisseur de 80 µm, une couche d'adhésif à base de copolymère éthylène - vinylacétate, une couche d'EVOH de 20 µm, une couche d'adhésif, une feuille de polyester standard de 12 µm recouverte d'une couche de l'ordre de 1 à 4 µm d'épaisseur de SiOx ou d'AlOx, une couche d'adhésif puis une couche intérieure de polypropylène de 120 µm.

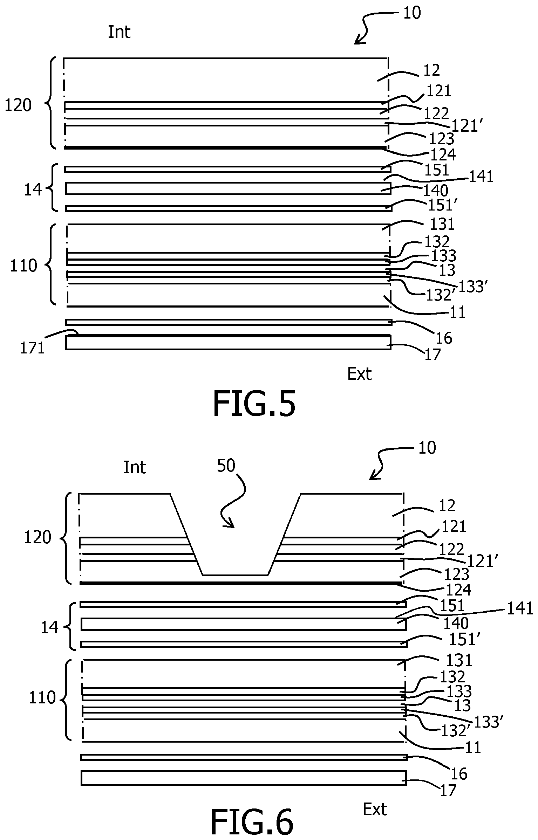

En pratique, la couche d'EVOH et la feuille de polyester recouverte d'oxyde peuvent aussi être séparées par une couche additionnelle de polymère, par exemple du polypropylène. Cela sera montré dans les descriptions des figures 5 et 6.

Les figures 2a et 2b donnent des illustrations de récipients 20a et 20b obtenus à partir d'une feuille de matériau multicouche selon l'invention. Ces récipients sont obtenus par pliage et soudure de surfaces de la feuille de matériau multicouche 20a et 20b selon l'invention.

L'homme du métier des emballages pliés connaît de nombreuses techniques pour plier une feuille destinée à la fabrication d'un emballage. Une technique connue consiste à plier la feuille autour d'une colonne présentant une section carrée ou rectangulaire. Pour plier la feuille, l'homme du métier adaptera éventuellement la courbure présente aux coins du carré ou du rectangle.

Ensuite, la technique de fabrication du récipient consiste à souder le matériau multicouche face intérieure contre face extérieure (soudure chair/cuir) ou face intérieure, respectivement extérieure contre face intérieure, respectivement extérieure (soudure chair/chair). Une telle soudure est avantageusement réalisée par un procédé thermique ou un procédé utilisant des ultrasons. Ces deux procédés consistent tous deux à faire fondre localement les couches extérieure et/ou intérieure en matériau polymère placées préalablement au contact l'une de l'autre. L'avantage du procédé à ultrasons est de pouvoir être utilisé quelle que soit l'épaisseur du matériau multicouche alors que les procédés thermiques nécessitent que le matériau multicouche ne soit pas trop épais. Les couches intérieures et/ou extérieures de polymère sont des couches homopolymère de manière à pouvoir être soudées l'une contre l'autre.

Avantageusement, la colonne de pliage sera légèrement chauffée pour diminuer les risques de cassures et faciliter le pliage.

Les formats présentés sur les figures 2a et 2b permettent respectivement de mettre côte à côte les récipients ou de les empiler aisément en optimisant le volume global occupé. En outre, le récipient ne risque pas d'être cassé par rapport aux récipients en verre.

Le stockage se fait comme pour les boites de conserve métalliques, à température ambiante, par exemple dans un simple placard. Les durées de conservation sont identiques à celles des boites de conserve, à savoir jusqu'à quatre ans. L'étanchéité obtenue est similaire à celle obtenue avec un bocal en verre au niveau de son couvercle.

Eventuellement, les couches intérieures et/ou extérieures sont chargées pour donner un coloris au récipient ou le rendre opaque. Il est aussi possible de rendre l'emballage localement pelable, c'est-à-dire que deux surfaces du récipient liées l'une à l'autre peuvent aisément être séparées pour ouverture du récipient. Par exemple, une telle zone pelable est située au niveau des parties désignées 21a et 21b sur les figures 20a et 20b. Le geste d'ouverture est alors rendu simple et facile. Cela est utile pour les enfants et les personnes âgées. Aucun outil n'est nécessaire pour ouvrir le récipient et il n'existe pas de risque de blessure à l'ouverture.

Le caractère pelable est conférée par l'introduction de charges au niveau des endroits où il est souhaitable de pouvoir décoller deux parties de la feuille constituant le récipient. Ainsi du sucre, éventuellement entouré de résine, de la chaux pulvérulente ou encore du talc, sont introduits de manière à générer des points mal collés entre eux. La soudure réalisée est alors d'une qualité moindre et est donc rendue facile à casser.

Les récipients formés sont ensuite remplis et scellés par soudure.

Une fois scellé le récipient est traité thermiquement, généralement en autoclave où la forme parallélépipédique du récipient est un avantage. La température de traitement que peut supporter un matériau multicouche selon l'invention est en général déterminée à partir de la résistance au chauffage des adhésifs utilisés. Ce sont en effet généralement des éléments limitants à ce sujet. Classiquement il est possible de chauffer de tels adhésifs jusqu'à 127-128°C.

La pression imposée dans l'autoclave où l'atmosphère est humide est choisie telle qu'elle permet de maintenir la forme du récipient constante et stable tout en montant en température.

L'invention permet en outre d'optimiser l'utilisation de l'autoclave. En effet, une fois chauffé en atmosphère humide, à la sortie de l'autoclave, le récipient 20a ou 20b présente une humidité telle que la couche d'EVOH a une perméabilité relativement faible. Mais, par inertie, le contenu du récipient 20 est chaud. Classiquement, à la sortie de l'autoclave, le contenu est à une température de 55°C à coeur.

Comme illustré sur la figure 3a, représentant schématiquement une section du matériau multicouche selon l'invention, la température intérieure Tᵢa est supérieure à la température extérieure Tₑa. Cela permet alors de favoriser l'évaporation de l'humidité H₂O présente notamment dans la couche 13 d'EVOH vers l'extérieur du récipient 20. Comme illustré, la circulation des gaz, en particulier de l'eau H₂O, vers l'intérieur du récipient 20 est à ce moment là bloquée par la présence de la couche 14 recouverte de Pet SiOx qui définit la perméabilité aux gaz minimale du matériau multicouche. La perméabilité de l'extérieur vers l'intérieur est donc faible et au maximum égale à la perméabilité offerte par la couche 14.

L'évacuation de l'humidité de l'intérieur vers l'extérieur est limitée à la partie du matériau multicouche située vers l'extérieur à partir de la couche 14. Le matériau multicouche est en effet globalement étanche de l'intérieur vers l'extérieur du récipient présentant une faible perméabilité similaire à celle observée de l'extérieur vers l'intérieur.

Au fur et à mesure du refroidissement du récipient, la couche d'EVOH 13 sèche et sa perméabilité aux gaz diminue. Comme illustré sur la figure 3b, cela garantit, une fois le récipient 20 refroidi de manière que la température intérieure Tᵢb soit identique à la température extérieure Tₑb, une étanchéité optimale du récipient 20. En particulier, la circulation d'oxygène O₂ est bloquée par la couche 13 d'EVOH.

La figure 5 présente un mode de réalisation détaillé de l'invention.

Le matériau multicouche 10 est un matériau complexé en trois étapes de complexage à partir de quatre films préparés préalablement. Parmi ces quatre films, se trouvent un film noté génériquement 120, comprenant la couche polymère intérieure 12 et un film comprenant la couche d'EVOH 13 ainsi que la couche de polymère extérieure 11.

Ces deux premiers films sont obtenus préalablement par extrusion des matériaux les constituant.

Ainsi, dans cet exemple, le film 120 est le résultat de l'extrusion d'une couche intérieure 12 de 75 µm d'épaisseur de polypropylène, par exemple pelable, d'une couche de polyamide 122 de 10 µm entre deux couches 121 et 121' de colle de type EVA de 9 µm, et d'une couche de polypropylène 123 traité de manière à déstructurer la surface 124. Un tel traitement de la surface 124, sinon vitrifiée, peut être réalisé par étincelage, attaque chimique ou tout autre procédé connu pour changer la qualité de l'état de surface. Ce traitement permet une bonne accroche des couches. La couche de polyamide 122 a un rôle de tampon vis-à-vis des dilatations différentielles des couches co-extrudées qui sont destinées à subir des traitements thermiques.

L'épaisseur de la couche intérieure 12 peut varier en fonction des besoins de l'application. L'épaisseur globale du matériau multicouche est préférentiellement inférieure à 500 µm mais peut atteindre des épaisseurs jusqu'à 1500 µm. L'épaisseur minimum est, quant à elle, de l'ordre de 150 µm.

Le film 120 assure principalement les fonctions de rigidité, pour laquelle l'épaisseur a une influence, dans le matériau multicouche et de possibilité de soudage, pour laquelle la présence de polypropylène pelable ou non est utile. Ce matériau est effectivement aisément soudable, par exemple par élévation de température locale à l'aide d'un fer appliqué sur l'extérieur du matériau multicouche. Des ultrasons peuvent aussi être appliqués pour élever la température localement au niveau de la jointure seulement.

Le film 110 est quant à lui le résultat de l'extrusion d'une couche 131 de polypropylène intercalaire de 38 µm, c'est-à-dire situé, dans le matériau multicouche final, entre la couche d'EVOH et la couche de matériau différentiel, d'une couche d'EVOH 13 de 20 µm entre deux doubles couches symétriques autour de la couche d'EVOH et d'une couche de polypropylène extérieure 11 de 38 µm. Ces doubles couches comprennent chacune une couche d'HV 132, ou 132', de 9 µm et une couche de polyamide, 133 ou 133', de 4,5 µm. Les épaisseurs des couches de polypropylène 131 et 11 peuvent varier en fonction des applications visées.

Le matériau différentiel 14 utilisé ici est une feuille de polyester 140 de 12 µm recouverte d'une couche 141 d'oxyde de silicium ou d'aluminium. Il est avantageusement traité de manière à déstructurer sa surface. Il est complexé, en plaçant la couche recouverte orientée vers la face du matériau multicouche destinée à être à l'intérieur du récipient final, d'abord avec le film 120 comprenant la couche intérieure 12 à l'aide d'une couche de colle stérilisable 151 puis avec le film 110 comprenant la couche d'EVOH 13 à l'aide d'une seconde couche de colle stérilisable 151'. L'ensemble est ensuite complexé, à l'aide d'une couche de colle stérilisable 16, avec une couche de polyester 17, par exemple de 12 µm, traité de manière à déstructurer sa surface 171 et avantageusement imprimée. L'épaisseur de la couche de polyester 17 peut varier en fonction de l'application visée.

En particulier, il peut être intéressant de faire varier les épaisseurs de certaines des couches du matériau multicouche 10 afin d'en changer les caractéristiques mécaniques, notamment la rigidité de l'ensemble, la facilité du pliage etc.

La figure 6 présente une caractéristique additionnelle avantageuse sur un matériau multicouche 10 tel que représenté sur la figure 5. Cette caractéristique permet précisément de faciliter le pliage et surtout de le rendre moins potentiellement dégradant pour le matériau multicouche 10. Cette caractéristique additionnelle sera d'autant plus importante et utile que le matériau multicouche sera d'une grande épaisseur.

En effet, plier un matériau multicouche 10 génère des contraintes d'autant plus grandes dans la structure du matériau multicouche 10 que celui-ci est épais. De telles contraintes peuvent être dommageables pour l'étanchéité des films utilisés, en particulier pour le film de polyester recouvert d'oxyde 14. La caractéristique additionnelle consiste à pratiquer une saignée ou rainure 50 gravée à chaud ou par laser dans le film 120 comprenant la couche de polymère intérieure 12. Elle permet de constituer un pré-pliage par diminution locale d'épaisseur du matériau multicouche 10 n'affectant pas les couches à faible perméabilité.

Cette caractéristique évite toute compression ou étirement traumatique de la couche d'oxyde 141. La saignée ou rainure 50 est avantageusement pratiquée sur tous les trajets des plis nécessaires à l'obtention du récipient finalement obtenue par pliage du matériau multicouche. Cette caractéristique vise à améliorer l'aptitude à être plié du matériau multicouche 10.

La saignée est avantageusement d'une profondeur de l'ordre de 50% de l'épaisseur totale du matériau multicouche. On constate que cela revient à faire la saignée dans le film 120, couche de rigidité, qui, à lui seul, représente généralement plus de 50% de l'épaisseur totale comme présenté dans l'exemple de la figure 5.

En résumé, l'invention permet d'obtenir un matériau multicouche pour fabriquer des récipients de perméabilité à l'oxygène minimale, éventuellement transparents, légers, peu fragiles, recyclables, voire biodégradables, aisément compactables, contrôlables aux rayons « X » ou au détecteur de métaux, micro-ondables, traitables thermiquement de 60°C à des températures supérieures à 125°C, aisément empilables pour optimiser les volumes de rangement et à ouverture facile et sans déchet indépendant à l'ouverture. Le matériau multicouche obtenu ne subit pas de déformation significative lors de traitement thermique, notamment en autoclave.

L'invention permet donc de proposer un réchauffage direct au four micro-ondes ou au bain-marie sans utiliser un autre récipient. L'utilisation du produit hors domicile, par exemple sur un lieu de travail, dans un bureau, à l'école, est facilitée.

L'invention permet de voir le produit au travers de l'emballage, possibilité offerte uniquement par les conserves en verre. Cette visibilité permet une identification facile et directe.

Comme tous les récipients destinés à la commercialisation de portions, les récipients fabriqués à l'aide de l'invention présente un aspect ludique permettant à chacun de composer une garniture sans contrainte dans le cadre d'un repas pris en commun.

Le matériau multicouche selon l'invention présente enfin l'avantage d'être peu couteux. Son utilisation revient approximativement au même prix que l'utilisation d'une boite de conserve et est moins cher que l'utilisation d'un complexe carton-papier. En outre, des techniques d'impression et d'étiquetage sur des matériaux plastiques sont bien connues pour faciliter l'information du consommateur.

On remarque enfin que des mises en oeuvre diverses peuvent être réalisées selon les principes de l'invention énoncés dans les revendications suivantes.

## Revendications

1. Récipient pour le conditionnement de produits traités thermiquement obtenu par pliage d'un matériau multicouche en feuille semi-rigide, ayant une tenue et une résistance à une température supérieure à 124°C et une haute imperméabilité aux gaz et une fois plié définissant un espace intérieur pour le conditionnement de produits traités thermiquement, **caractérisé en ce qu'**il comprend au moins une couche dite extérieure de matériau polymère, à l'extérieur de l'espace intérieur, et une couche dite intérieure de matériau polymère, destinée à être à l'intérieur de l'espace intérieur, entre lesquelles le matériau multicouche présente une faible perméabilité aux gaz telle qu'il existe un gradient positif de sensibilité à l'humidité de cette perméabilité aux gaz de l'intérieur vers l'extérieur, ce gradient permettant le séchage du matériau multicouche par évaporation vers l'extérieur pendant une phase de stabilisation du matériau multicouche, consécutive au traitement thermique des produits conditionnés et telle qu'il existe un gradient positif de perméabilité aux gaz de l'intérieur vers l'extérieur du matériau multicouche lorsque le matériau multicouche est placé en atmosphère humide et un gradient négatif de perméabilité aux gaz de l'intérieur vers l'extérieur du matériau multicouche lorsque le matériau multicouche est placé en atmosphère sèche, le dit gradient étant réalisé en intercalant au moins une couche d'EVOH (copolymère d'éthylène et d'alcool vinylique) d'au moins 10 µm entre les deux couches extérieure et intérieure de matériau polymère, et en intercalant un matériau dit différentiel faisant barrière aux gaz et présentant une sensibilité à l'humidité inférieure à l'EVOH entre la couche de matériau polymère intérieure et la couche d'EVOH, le dit matériau différentiel étant un matériau polymère dit porteur recouvert de d'oxyde de Silicium (SiOx) ou d'oxyde d'Aluminium (AlOx), le dit matériau différentiel étant orienté de telle manière que la face orientée vers l'intérieur est la face recouverte de SiOx ou AlOx.

2. Récipient selon la revendication 1 **caractérisé en ce que** le dit matériau multicouche comprend au moins une couche additionnelle de polymère intercalée entre ladite couche d'EVOH et le dit matériau différentiel.

3. Récipient selon la revendication 1 **caractérisé en ce que** le dit matériau multicouche comprend des couches de colle entre les différentes couches.

4. Récipient selon l'une des revendications 1 à 3, **caractérisé en ce que** le dit matériau différentiel comprend un matériau polymère porteur qui est du polyester.

5. Récipient selon l'une des revendications précédentes, **caractérisé en ce que** des saignées ou rainures sont pratiquées dans la couche intérieure de manière à diminuer localement l'épaisseur du matériau au niveau des lignes de pli permettant la formation du récipient par pliage.

6. Récipient selon l'une des revendications précédentes, **caractérisé en ce que** son épaisseur est comprise entre 100 µm et 500 µm.

7. Récipient selon l'une des revendications précédentes, **caractérisé en ce que**, pour une contenance de 500ml, la perméabilité à l'oxygène après stabilisation du matériau multicouche est inférieure à 0,01 cc d'O₂/24 heures à 23°C à 50% d'humidité relative par récipient.

8. Récipient selon l'une des revendications précédentes, **caractérisé en ce qu'**il est transparent.

9. Récipient selon l'une des revendications précédentes, **caractérisé en ce que** le matériau polymère utilisé dans les couches extérieure et intérieure et la dite couche additionnelle intercalaire de matériau polymère est principalement du polypropylène.

10. Récipient selon l'une des revendications précédentes, **caractérisé en ce qu'**il est micro ondable après ouverture afin de réchauffer les aliments.

11. Récipient selon l'une des revendications précédentes, **caractérisé en ce qu'**il est destiné à conditionner un produit choisi parmi les produits alimentaires, d'hygiène, pharmaceutiques.

12. Procédé d'obtention d'un récipient selon l'une des revendications 1 à 11 comprenant les étapes consistant à plier et souder selon une forme de récipient un dit matériau multicouche en feuille semi-rigide ayant une tenue et une résistance à une température supérieure à 124°C et une haute imperméabilité aux gaz, ledit pliage définissant un espace intérieur pour le conditionnement de produits traités thermiquement **caractérisé en ce que** le dit matériau multicouche en feuille est obtenue par un procédé comprenant au moins les étapes consistant à extruder en feuille des matériaux monocouches et/ou multicouches dits intermédiaires et/ou complexer des matériaux monocouches et/ou multicouches intermédiaires, comprenant au moins une couche dite extérieure de matériau polymère et une couche dite intérieure de matériau polymère dans lequel l'étape d'extrusion et/ou de complexage est réalisée de manière à ce que le matériau multicouche présente une faible perméabilité aux gaz telle qu'il existe un gradient positif de sensibilité à l'humidité de cette perméabilité aux gaz de l'intérieur vers l'extérieur, ce gradient permettant le séchage du matériau multicouche par évaporation vers l'extérieur pendant une phase de stabilisation du matériau multicouche consécutive au traitement thermique des produits conditionnés et telle qu'il existe un gradient positif de perméabilité aux gaz de l'intérieur vers l'extérieur du matériau multicouche lorsque le matériau multicouche est placé en atmosphère humide et un gradient négatif de perméabilité aux gaz de l'intérieur vers l'extérieur du matériau multicouche lorsque le matériau multicouche est placé en atmosphère sèche.

13. Procédé selon la revendication 12, **caractérisé en ce qu'**il comprend au moins une étape d'extrusion d'une couche d'EVOH avec la couche extérieure de matériau polymère.

14. Procédé selon la revendication 13, **caractérisé en ce qu'**il comprend l'étape d'extruder ou de complexer un matériau intermédiaire dit différentiel faisant barrière aux gaz et présentant une sensibilité à l'humidité inférieure à l'EVOH entre la couche de matériau polymère intérieure et la couche d'EVOH.

15. Procédé selon la revendication 14, dans lequel le matériau différentiel est un matériau polymère dit porteur recouvert d'oxyde de Silicium ou d'oxyde d'Aluminium.

16. Procédé selon l'une des revendications 12 à 15, dans lequel le matériau différentiel est obtenu dans une étape de préfabrication au cours de laquelle un matériau faisant barrière aux gaz et présentant une sensibilité à l'humidité inférieure à l'EVOH est déposé sur un matériau intermédiaire polymère, le matériau différentiel ainsi préfabriqué étant ensuite complexé avec les autres matériaux monocouches ou multicouches intermédiaires pour l'obtention du matériau multicouche en feuille final.

17. Procédé selon l'une des revendications 12 à 16, **caractérisé en ce qu'**il comprend l'étape de pratiquer des saignées ou rainures dans la couche intérieure du matériau multicouche de manière à diminuer localement l'épaisseur du matériau au niveau des lignes de pli permettant la formation du récipient par pliage.

18. Procédé de conditionnement d'un produit comprenant les étapes de :
Remplir le récipient obtenu selon le procédé de l'une des revendications 12 à 17, avec le produit,
Sceller le récipient par soudure,
Traiter thermiquement l'ensemble,
Laisser l'ensemble refroidir à température ambiante afin de laisser sécher le matériau multicouche par évaporation vers l'extérieur du récipient.

19. Procédé de conditionnement d'un produit selon la revendication 18 dans lequel l'étape de scellage est réalisée par un procédé choisi parmi les procédés thermique et les procédés utilisant des ultrasons.

20. Procédé de conditionnement d'un produit selon l'une des revendications 18 et 19, dans lequel l'étape de traitement thermique consiste à faire subir à l'ensemble le traitement thermique dans un autoclave à contre-pression.

21. Procédé de conditionnement d'un produit selon l'une des revendications 18 à 20, dans lequel le traitement thermique est choisi parmi la pasteurisation, la stérilisation, le remplissage aseptique.

## Patentansprüche

1. Behälter zum Verpacken von wärmebehandelten Produkten, der durch Falten eines mehrlagigen Materials aus halbstarrer Folie erhalten wird, das eine Festigkeit und eine Widerstandsfähigkeit bei bzw. gegenüber einer Temperatur von über 124 °C sowie eine hohe Gasundurchlässigkeit aufweist und das, sobald es gefaltet ist, einen Innenraum zum Verpacken von wärmebehandelten Produkten definiert, **dadurch gekennzeichnet, dass** er wenigstens eine sogenannte äußere Schicht aus Polymermaterial außerhalb des Innenraums und eine sogenannte innere Schicht aus Polymermaterial, welche dazu bestimmt ist, sich innerhalb des Innenraums zu befinden, umfasst, zwischen denen das mehrlagige Material eine geringe Gasdurchlässigkeit aufweist, derart, dass ein positiver Feuchtigkeitsempfindlichkeitsgradient dieser Gasdurchlässigkeit von innen nach außen existiert, wobei dieser Gradient die Trocknung des mehrlagigen Materials durch Verdampfen nach außen während einer Stabilisierungsphase des mehrlagigen Materials ermöglicht, die sich an die Wärmebehandlung der verpackten Produkte anschließt und derart ist, dass ein positiver Gasdurchlässigkeitsgradient von der Innenseite zur Außenseite des mehrlagigen Materials besteht, wenn das mehrlagige Material in feuchter Atmosphäre angeordnet ist, und ein negativer Gasdurchlässigkeitsgradient von der Innenseite zur Außenseite des mehrlagigen Materials, wenn das mehrlagige Material in trockener Atmosphäre angeordnet ist, wobei der Gradient dadurch hergestellt wird, dass wenigstens eine Schicht aus EVOH (Ethylen-Vinylalkohol-Copolymer) von wenigstens 10 µm zwischen den beiden äußeren und inneren Schichten aus Polymermaterial eingefügt wird und dass ein sogenanntes Differenzmaterial, das eine Gasbarriere bildet und eine geringere Feuchtigkeitsempfindlichkeit als das EVOH aufweist, zwischen der inneren Schicht aus Polymermaterial und der Schicht aus EVOH eingefügt wird, wobei das Differenzmaterial ein sogenanntes Träger-Polymermaterial ist, das mit Siliziumoxid (SiOx) oder mit Aluminiumoxid (AlOx) überzogen ist, wobei das Differenzmaterial derart ausgerichtet ist, dass die nach innen gewandte Seite die mit SiOx oder AlOx überzogene Seite ist.

2. Behälter nach Anspruch 1, **dadurch gekennzeichnet, dass** das mehrlagige Material wenigstens eine zusätzliche Polymerschicht umfasst, die zwischen der EVOH-Schicht und dem Differenzmaterial eingefügt ist.

3. Behälter nach Anspruch 1, **dadurch gekennzeichnet, dass** das mehrlagige Material Kleberschichten zwischen den verschiedenen Schichten umfasst.

4. Behälter nach einem der Ansprüche 1 bis 3, **dadurch gekennzeichnet, dass** das Differenzmaterial ein Träger-Polymermaterial umfasst, das Polyester ist.

5. Behälter nach einem der vorhergehenden Ansprüche, **dadurch gekennzeichnet, dass** Rillen oder Nuten in der inneren Schicht ausgebildet sind, um die Dicke des Materials im Bereich der Faltlinien, die die Bildung des Behälters durch Falten ermöglichen, lokal zu verringern.

6. Behälter nach einem der vorhergehenden Ansprüche, **dadurch gekennzeichnet, dass** seine Dicke im Bereich zwischen 100 µm und 500 µm liegt.

7. Behälter nach einem der vorhergehenden Ansprüche, **dadurch gekennzeichnet, dass** bei einem Fassungsvermögen von 500 ml die Sauerstoffdurchlässigkeit nach Stabilisierung des mehrlagigen Materials weniger als 0,01 cc O₂/24 Stunden bei 23 °C bei 50 %iger relativer Feuchtigkeit pro Behälter beträgt.

8. Behälter nach einem der vorhergehenden Ansprüche, **dadurch gekennzeichnet, dass** er transparent ist.

9. Behälter nach einem der vorhergehenden Ansprüche, **dadurch gekennzeichnet, dass** das Polymermaterial, das bei der äußeren und der inneren Schicht und der zusätzlichen Zwischenschicht aus Polymermaterial verwendet wird, hauptsächlich Polypropylen ist.

10. Behälter nach einem der vorhergehenden Ansprüche, **dadurch gekennzeichnet, dass** er nach Öffnen mikrowellengeeignet ist, um die Nahrungsmittel zu erwärmen.

11. Behälter nach einem der vorhergehenden Ansprüche, **dadurch gekennzeichnet, dass** er dazu bestimmt ist, ein Produkt zu verpacken, das aus Nahrungsmittel-, Hygiene-, Pharmaprodukten ausgewählt ist.

12. Verfahren zum Erhalten eines Behälters nach einem der Ansprüche 1 bis 11, umfassend die Schritte, die darin bestehen, ein mehrlagiges Material aus halbstarrer Folie, das eine Festigkeit und eine Widerstandsfähigkeit bei bzw. gegenüber einer Temperatur von über 124 °C sowie eine hohe Gasundurchlässigkeit aufweist, entsprechend einer Behälterform zu falten und zu verschweißen, wobei das Falten einen Innenraum zum Verpacken von wärmebehandelten Produkten definiert, **dadurch gekennzeichnet, dass** das mehrlagige Folienmaterial durch ein Verfahren erhalten wird, das wenigstens die Schritte umfasst, die darin bestehen, sogenannte einlagige und/oder mehrlagige Zwischenmaterialien als Folie zu extrudieren und/oder einlagige und/oder mehrlagige Zwischenmaterialien zu kaschieren, die wenigstens eine sogenannte äußere Schicht aus Polymermaterial und eine sogenannte innere Schicht aus Polymermaterial umfassen, wobei der Extrusions- und/oder Kaschierschritt derart durchgeführt wird, dass das mehrlagige Material eine geringe Gasdurchlässigkeit aufweist, derart, dass ein positiver Feuchtigkeitsempfindlichkeitsgradient dieser Gasdurchlässigkeit von innen nach außen existiert, wobei dieser Gradient die Trocknung des mehrlagigen Materials durch Verdampfen nach außen während einer Stabilisierungsphase des mehrlagigen Materials ermöglicht, die sich an die Wärmebehandlung der verpackten Produkte anschließt und derart ist, dass ein positiver Gasdurchlässigkeitsgradient von der Innenseite zur Außenseite des mehrlagigen Materials besteht, wenn das mehrlagige Material in feuchter Atmosphäre angeordnet ist, und ein negativer Gasdurchlässigkeitsgradient von der Innenseite zur Außenseite des mehrlagigen Materials, wenn das mehrlagige Material in trockener Atmosphäre angeordnet ist.

13. Verfahren nach Anspruch 12, **dadurch gekennzeichnet, dass** es wenigstens einen Schritt des Extrudierens einer EVOH-Schicht mit der äußeren Schicht aus Polymermaterial umfasst.

14. Verfahren nach Anspruch 13, **dadurch gekennzeichnet, dass** es den Schritt des Extrudierens oder Kaschierens eines sogenannten Differenz-Zwischenmaterials, das eine Gasbarriere bildet und eine geringere Feuchtigkeitsempfindlichkeit als das EVOH aufweist, zwischen die innere Schicht aus Polymermaterial und die Schicht aus EVOH umfasst.

15. Verfahren nach Anspruch 14, bei dem das Differenzmaterial ein sogenanntes Träger-Polymermaterial ist, das mit Siliziumoxid oder mit Aluminiumoxid überzogen ist.

16. Verfahren nach einem der Ansprüche 12 bis 15, bei dem das Differenzmaterial in einem Vorfertigungsschritt erhalten wird, im Laufe dessen ein Material, das eine Gasbarriere bildet und eine geringere Feuchtigkeitsempfindlichkeit als das EVOH aufweist, auf einem Zwischenpolymermaterial abgeschieden wird, wobei das so vorgefertigte Differenzmaterial anschließend mit den weiteren einlagigen oder mehrlagigen Zwischenmaterialien für den Erhalt des endgültigen folienförmigen mehrlagigen Materials kaschiert wird.

17. Verfahren nach einem der Ansprüche 12 bis 16, **dadurch gekennzeichnet, dass** es den Schritt des Ausbildens von Rillen oder Nuten in der inneren Schicht des mehrlagigen Materials umfasst, um die Dicke des Materials im Bereich der Faltlinien, die die Bildung des Behälters durch Falten ermöglichen, lokal zu verringern.

18. Verfahren zum Verpacken eines Produktes, umfassend die Schritte:
Füllen des nach dem Verfahren von einem der Ansprüche 12 bis 17 erhaltenen Behälters mit dem Produkt,
Verschließen des Behälters durch Schweißen,
Wärmebehandeln des Ganzen,
Abkühlenlassen des Ganzen auf Raumtemperatur, um das mehrlagige Material des Behälters durch Verdampfen nach außen trocknen zu lassen.

19. Verfahren zum Verpacken eines Produktes nach Anspruch 18, bei dem der Schritt des Verschließens durch ein Verfahren vollzogen wird, das aus den thermischen Verfahren und den Ultraschall verwendenden Verfahren ausgewählt ist.

20. Verfahren zum Verpacken eines Produktes nach einem der Ansprüche 18 und 19, bei dem der Schritt der Wärmebehandlung darin besteht, das Ganze der Wärmebehandlung in einem Gegendruckautoklaven zu unterziehen.

21. Verfahren zum Verpacken eines Produktes nach einem der Ansprüche 18 bis 20, bei dem die Wärmebehandlung aus der Pasteurisierung, der Sterilisation, der aseptischen Abfüllung ausgewählt ist.

## Claims

1. Container for packaging thermally proceeded products obtained by folding a multilayer material in a semi-rigid sheet having hold and resistance to temperatures in excess of 124°C and high impermeability to gases and once folded defining an internal space for the packaging of thermally treated products wherein it comprises at least one external layer of a polymer material, outside the internal space, and one internal layer of a polymer material, inside the internal space, between which the multilayer material has low gas permeability such that there is a positive humidity sensitivity gradient of this gas permeability from the inside outwards, this gradient allowing the multilayer material to be dried by evaporation towards the outside during the multilayer material stabilisation phase following thermal treatment of packaged products and such that there is a positive gas permeability gradient from the inside towards the outside of the multilayer material when the multilayer material is placed in a humid atmosphere and a negative gas permeability gradient from the inside towards the outside of the multilayer material when the multilayer material is placed in a dry atmosphere, said gradient being created by inserting at least one EVOH layer (copolymer of ethylene and vinyl alcohol) of at least 10 µm between the two external and internal layers of the polymer material, and by inserting a differential material constituting a gas barrier and presenting humidity sensitivity that is lower than EVOH between the interior polymer material and EVOH layer, said differential material being a carrier polymer material coated with silicon oxide (SiOx) or aluminium oxide (AlOx), said differential material being positioned in such a way that the side positioned towards the inside is the side coated with SiOx or AlOx.

2. Container according to claim 1 wherein said multilayer material comprises at least one additional polymer layer inserted between the EVOH layer and said differential material.

3. Container according to claim 1 or 2 wherein said multilayer material comprises adhesive layers between the different layers.

4. Container according to one of claims 1 to 3 wherein said differential material comprises a carrier polymer material which is polyester.

5. Container according to one of the preceding claims wherein cutting or grooving is carried out in the internal layer so as to locally reduce the thickness of the material along the fold lines allowing the container to be shaped by folding.

6. Container according to one of the preceding claims wherein its thickness is between 100 µm and 500 µm.

7. Container according to one of the preceding claims wherein for 500 ml container, oxygen permeability after stabilisation of the multilayer material is below 0.01 cc of O₂/24 hours at 23°C at 50% relative humidity per container.

8. Container according to one of the preceding claims wherein it is transparent.

9. Container according to one of the preceding claims wherein the polymer material used in the external and internal layers and said inserted additional layer of polymer material is mainly polypropylene.

10. Container according to one of the preceding claims wherein it can be microwaved after opening in order to heat up the food contained within.

11. Container according to one of the preceding claims wherein it is intended for the packaging of a product chosen from among food, hygiene and pharmaceutical products.

12. Process for obtaining a container according to one of claims 1 to 11 comprising the steps consisting in folding and soldering in a container form a said multilayer material in semi-rigid sheets having hold and resistance to temperatures in excess of 124°C and high impermeability to gases, said folding defining an internal space for the packaging of thermally treated products wherein said multilayer material is obtained by a process comprising at least the steps consisting in extruding into sheets of single layer materials and/or multilayer intermediate materials and/or complexing single layer materials and/or intermediate multilayer materials, comprising at least one external layer of a polymer material and one internal layer of a polymer material wherein the extrusion and/or complexing step is carried out in such a manner that the multilayer material has low permeability to gases in order to create a positive humidity sensitivity gradient of the gas permeability from the inside towards the outside, this gradient allowing drying of the multilayer material by evaporation towards the outside during stabilisation of the multilayer material following thermal processing of the packaged product and such that there is a positive gas permeability gradient from the inside towards the outside of the multilayer material when the multilayer material is placed in a humid atmosphere and a negative gas permeability gradient from the inside towards the outside of the multilayer material when the multilayer material is placed in a dry atmosphere.

13. Process according to claim 12 wherein it comprises at least one extrusion step of an EVOH layer with the external layer of the polymer material.

14. Process according to claim 13 wherein it comprises a step to extrude or complex an intermediate differential material acting as a gas barrier and presenting sensitivity to humidity lower than EVOH between a layer of polymer material and the EVOH layer.

15. Process according to claim 14 wherein the differential material is a carrier polymer material coated with silicon oxide or aluminium oxide.

16. Process according to one of claims 12 to 15 wherein the differential material is obtained in a pre-manufacturing step in the course of which a material constituting the gas barrier and presenting lower humidity sensitivity that EVOH is deposited on an intermediate polymer material, the differential material thus pre-manufactured then being complexed with other intermediate single layer or multilayer materials in order to obtain the final multilayer material in sheet.

17. Process according to one of claims 12 to 16 wherein it includes a cutting or grooving step carried out in the internal layer so as to locally reduce the thickness of the material along the fold lines allowing the container to be shaped by folding.

18. Process for packaging a product consisting of the following steps:
Filling the container obtained according to one of claims 12 to 17, with a product,
Sealing the container by soldering,
Thermally processing the container,
Allowing the container to cool down to room temperature in order to allow the multilayer material to dry by evaporation towards the outside of the container.

19. Process for packaging a product according to claim 18 wherein the sealing step is carried out using a process chosen from among thermal processes and processes using ultrasound.

20. Process for packaging a product according to one of claims 18 and 19 wherein the thermal processing step consists in thermal processing in an autoclave at counter pressure.

21. Process for packaging a product according to one of claims 18 to 20 wherein thermal treatment is chosen from among pasteurisation, sterilisation and aseptic filling.
